# EUROPÄISCHE PATENTANMELDUNG

(11) **EP 2 196 808 A1**
(43) Veröffentlichungstag der Anmeldung: **16.06.2010**
(21) Anmeldenummer: 09176036.3
(22) Anmeldetag: 16.11.2009
(51) Int. Cl.: G01P 3/48, G01P 3/488, F16H 59/38

(54) **Anordnung zur Ermittlung der Drehzahl einer schwimmend gelagerten Hauptwelle in einem Mehrgruppengetriebe**

(30) Priorität: 15.12.2008 DE 102008054666
(71) Anmelder: ZF Friedrichshafen AG, 88038 Friedrichshafen (DE)
(72) Erfinder: Miller, Martin, 88090 Immenstaad (DE)

(57) **Zusammenfassung**

Die Erfindung betrifft eine Anordnung zur Ermittlung der Drehzahl einer schwimmend gelagerten Hauptwelle (4) eines Hauptgetriebes (2) mit nachfolgend angeordneter Bereichsgruppe (3) in Form eines Planetengetriebes, wobei die Anordnung eine Hauptwelle (4) und eine in axialer Verlängerung der Hauptwelle (4) angeordnete, der Bereichsgruppe (3) zugeordnete Sonnenradwelle (5) aufweist, wobei die Hauptwelle (4) und die Sonnenradwelle (5) drehfest miteinander verbunden sind, und wobei die Anordnung einen drehfest mit der Hauptwelle (4) verbundenen Drehzahlgeber (8) und einen dem Drehzahlgeber (8) zugeordneten feststehenden Drehzahlsensor (9) aufweist. Der Drehzahlgeber (8) ist dabei an der Sonnenradwelle (5) oder an einer Verbindungsmuffe (6) zwischen der Hauptwelle (4) und der Sonnenradwelle (5) angeordnet.

## Beschreibung

Die vorliegende Erfindung betrifft eine Anordnung zur Ermittlung der Drehzahl einer schwimmend gelagerten Hauptwelle eines Hauptgetriebes mit nachfolgend angeordneter Bereichsgruppe in Form eines Planetengetriebes mit einem drehfest mit der Hauptwelle verbundenen Drehzahlgeber und einem feststehenden Drehzahlsensor, mit dessen Hilfe die Drehzahl an dem Drehzahlgeber abgegriffen werden kann. Ferner betrifft die Erfindung ein Mehrgruppengetriebe mit einer solchen Anordnung.

Aus dem Stand der Technik sind unterschiedliche Anordnungen zur Ermittlung der Drehzahl einer Getriebewelle bekannt. Diese auch als Drehzahlabgriffseinrichtungen bekannten Anordnungen beispielsweise zum Generieren eines Geschwindigkeitssignals für ein Kraftfahrzeug bestehen im Wesentlichen aus einem drehfest mit der entsprechenden Getriebewelle verbundenen Signal- oder Drehzahlgeber, dem ein feststehender Drehzahlsensor zugeordnet ist, um die Drehzahl von dem Drehzahlgeber abzugreifen.

Bei einigen der aus dem Stand der Technik bekannten Drehzahlabgriffseinrichtungen führen zusätzliche Bauteile wie Signalgeber oder Drehzahlgeberzahnräder zu einer Vergrößerung der Gesamtlänge des Getriebes und zu einer Gewichtszunahme, was bei bestimmten Anordnungen des Getriebes innerhalb des Kraftfahrzeuges nachteilig sein kann.

Zur Vermeidung dieser Nachteile schlägt die DE 10 2006 023 554 A1 eine Anordnung zur Ermittlung der Drehzahl einer Getriebewelle für das Getriebe eines Kraftfahrzeuges vor, die ebenfalls einen Drehzahlgeber und einen Drehzahlsensor umfasst, wobei der Drehzahlgeber an einer drehfest an der Getriebewelle angeordneten, axial verschiebbaren Schaltmuffe angeordnet ist. Diese Lösung ist insofern von Vorteil, als dass die vorhandene Schaltmuffe gleichzeitig als Signalgeber fungiert, wodurch das Gewicht des Getriebes nicht durch ein zusätzliches Bauteil erhöht und die Gesamtlänge des Getriebes nicht durch die Drehzahlabgriffseinrichtung verlängert wird.

Bei einer derartigen Drehzahlabgriffseinrichtungen im Zusammenhang mit einer schwimmend gelagerten Getriebewelle, beispielsweise einer Hauptwelle, entsteht jedoch das Problem, dass die Qualität des Drehzahlsignals nicht ausreichend gut ist, d.h. die Signale der Drehzahlabgriffseinrichtung sind zumindest zeitweise nicht vorhanden oder fehlerhaft. Verursacht wird dies dadurch, dass der Messabstand zwischen dem Drehzahlgeber und dem Drehzahlsensor durch die Bewegungen der Getriebewelle in radialer Richtung nicht in allen Betriebsphasen konstant gehalten werden kann. Dieser Nachteil betrifft auch eine Drehzahlabgriffseinrichtung gemäß der DE 10 2006 023 554 A1, weil dabei die Schaltmuffe mit dem Drehzahlgeber die radialen Bewegungen der schwimmend gelagerten Hauptwelle mit ausführt.

Der vorliegenden Erfindung liegt deshalb die Aufgabe zu Grunde, eine Anordnung zur Ermittlung der Drehzahl einer schwimmend gelagerten Hauptwelle eines Hauptgetriebes mit nachfolgend angeordneter Bereichsgruppe in Planetenbauweise zu schaffen, die die vorstehend genannten Nachteile überwindet. Darüber hinaus liegt der Erfindung die Aufgabe zu Grunde, ein Mehrgruppengetriebe für ein Kraftfahrzeug mit einer solchen vorteilhaften Anordnung zu schaffen.

Die Lösung dieser Aufgabe erfolgt an Hand der in Patentanspruch 1 und 8 angegebenen Merkmale. Vorteilhafte Ausführungsformen der Erfindung sind Gegenstand der Unteransprüche.

Eine erste erfindungsgemäßen Anordnung zur Ermittlung der Drehzahl einer schwimmend gelagerten Hauptwelle eines Hauptgetriebes mit nachfolgend angeordneter Bereichsgruppe in Form eines Planetengetriebes weist eine Hauptwelle, eine in axialer Verlängerung der Hauptwelle angeordnete Sonnenradwelle der Bereichsgruppe und eine Verbindungsmuffe auf. Die Verbindungsmuffe verbindet die Hauptwelle und die Sonnenradwelle drehfest miteinander. Die Anordnung weist des Weiteren einen drehfest mit der Hauptwelle verbundenen Drehzahlgeber und einen feststehenden Drehzahlsensor auf, wobei mit dem Drehzahlsensor die Drehzahl an dem Drehzahlgeber abgreifbar ist. Der Drehzahlgeber ist am Umfang der drehfest an der Hauptwelle angeordneten Verbindungsmuffe vorgesehen.

Diese erste Anordnung hat den Vorteil, dass die schwimmend gelagerte Hauptwelle an der Drehzahlmessstelle nur sehr geringe radiale Bewegungen macht, weil die Verbindungsmuffe und damit die Drehzahlmessstelle nahe an dem Sonnenrad der Bereichsgruppe angeordnet ist und das Sonnenrad in radialer Richtung nahezu spielfrei in den Planetenrädern der Bereichsgruppe gelagert ist. Je weiter die Drehzahlmessstelle von dem Sonnenrad der Bereichsgruppe entfernt ist, desto größer werden die radialen Bewegungen der Hauptwelle, die durch deren schwimmende Lagerung verursacht sind.

Eine zweite erfindungsgemäße Anordnung zur Ermittlung der Drehzahl einer schwimmend gelagerten Hauptwelle eines Hauptgetriebes mit nachfolgend angeordneter Bereichsgruppe in Planetenbauweise unterscheidet sich dadurch von der oben beschriebenen ersten Anordnung, dass der Drehzahlgeber an der Sonnenradwelle vorgesehen ist anstatt an der Verbindungsmuffe. Die Hauptwelle und die Sonnenradwelle könne in dieser Anordnung auch in anderer Weise drehfest miteinander gekoppelt sein, als mittel einer Verbindungsmuffe.

Auch diese zweite Anordnung hat den Vorteil, dass die schwimmend gelagerte Hauptwelle an der Drehzahlmessstelle nur sehr geringe radiale Bewegungen macht, weil die Sonnenradwelle und damit die Drehzahlmessstelle nahe an dem Sonnenrad der Bereichsgruppe angeordnet ist und das Sonnenrad in radialer Richtung nahezu spielfrei in den Planetenrädern gelagert ist. Dadurch bleibt der Messabstand zwischen dem Drehzahlgeber und dem Drehzahlsensor konstant und die hohe Qualität und Zuverlässigkeit des Messsignals ist gewährleistet.

Gemäß einer bevorzugten Ausgestaltung der Erfindung ist der Drehzahlgeber als eine auf die Verbindungsmuffe aufgepresste Scheibe oder Buchse mit einer Zählverzahnung ausgebildet. Auf diese Weise kann die Zählverzahnung mittels der Scheibe bzw. der Buchse vorteilhaft so in einer bereits bestehenden Getriebeanordnung positioniert werden, dass der Drehzahlsensor mit geringem Aufwand und ohne zusätzlichen Bauraumbedarf beispielsweise am Getriebegehäuse befestigt werden kann.

Eine andere bevorzugte Ausgestaltung sieht dagegen vor, den Drehzahlgeber als eine direkt am Außenumfang der Verbindungsmuffe bzw. der Sonnenradwelle angeformte Zählverzahnung auszubilden.

Der Drehzahlgeber ist somit integriert in ein bereits vorhandenes Bauteil des Getriebes, wodurch - ähnlich wie bei der aus der DE 10 2006 023 554 A1 bekannten Drehzahlabgriffseinrichtung - ein bereits vorhandenes Getriebeteil teilweise als Drehzahlgeber fungiert. Insoweit ist kein vollständiges, separates Drehzahlgeberzahnrad erforderlich, so dass eine Gewichtsreduzierung und eine Längenreduzierung des Getriebes erreicht werden.

Weitere bevorzugte Ausführungen sehen vor, dass der Drehzahlsensor die Drehzahl in radialer bzw. in axialer Richtung an dem Drehzahlgeber abgreift. Je nach Anordnung der weiteren Getriebebauteile kann so die einfachere Einbauvariante gewählt werden. Ein Drehzahlabgriff in axialer Richtung hat den weiteren Vorteil, dass auch geringe radiale Bewegungen der Hauptwelle an der Drehzahlmessstelle durch eine senkrecht zur Drehachse der Hauptwelle stehende Zählverzahnung des Drehzahlgebers nahezu vollständig kompensiert werden können, weil dann der Messabstand zwischen Drehzahlgeber und Drehzahlsensor in jeder Betriebsphase gleich groß bleibt.

Der Drehzahlsensor ist vorzugsweise endseitig an einem Sensorarm befestigt, wobei der Sensorarm am Getriebegehäuse befestigt ist und sich bis nahe an den Drehzahlgeber erstreckt. Beispielsweise kann der Sensorarm an dem Getriebegehäuse des Hauptgetriebes befestigt sein und sich durch dessen Stellerraum erstrecken. Unter dem Stellerraum ist hierbei derjenige Raum innerhalb des Hauptgetriebes zu verstehen, in dem sich Stellmittel der Getriebeschaltung befinden, wie beispielsweise Schaltschienen und Schaltgabeln.

Ein erfindungsgemäßes Mehrgruppengetriebe für ein Kraftfahrzeug weist eine zwischen zwei Vorgelegewellen schwimmend gelagerten Hauptwelle und die oben beschriebene erfindungsgemäße Anordnung zur Ermittlung der Drehzahl der Hauptwelle auf.

Die Erfindung wird im Folgenden anhand einer beispielhaften Ausführungsform unter Bezugnahme auf die zugehörigen Zeichnungen näher erläutert.

Es zeigen:
- Fig. 1: eine schematische Darstellung eines Mehrgruppengetriebes mit der erfindungsgemäßen Anordnung zur Ermittlung der Drehzahl einer Getriebewelle und
- Fig. 2: eine vereinfachte Darstellung eines Ausschnittes aus einem Mehrgruppengetriebe mit einer erfindungsgemäßen Anordnung.

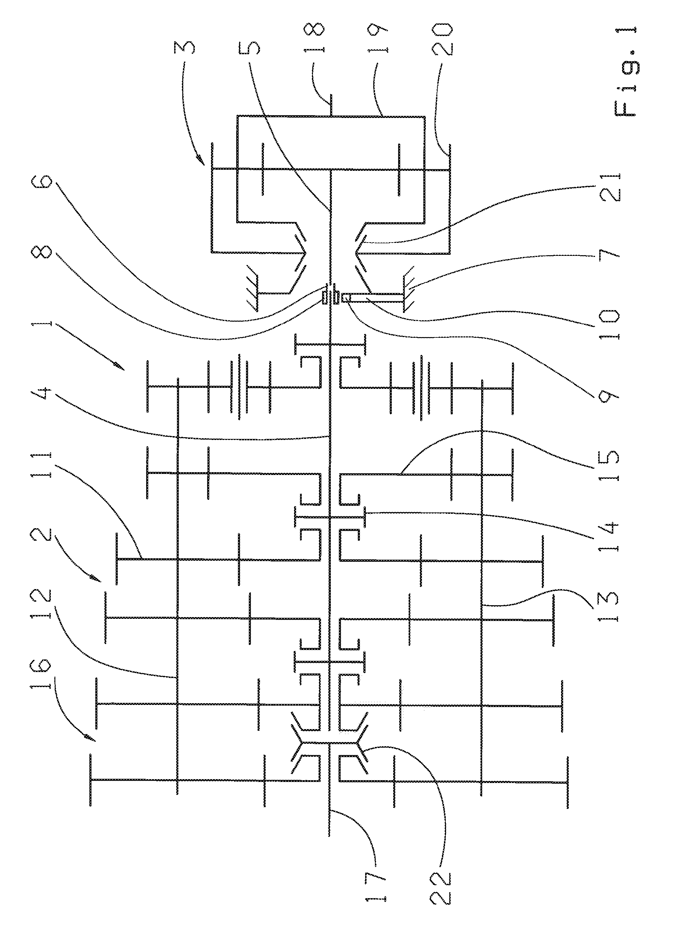

Die Fig. 1 zeigt ein Mehrgruppengetriebe 1 mit einer Splitgruppe 16, einem Hauptgetriebe 2 und einer Bereichsgruppe 3. Das Hauptgetriebe 2 ist mit einer Hauptwelle 4 und zwei Vorgelegewellen 12, 13 ausgeführt. Die Bereichsgruppe 3 ist in Form eines Planetengetriebes ausgeführt. Das Antriebsdrehmoment wird von einer Eingangswelle 17 kommend über das Splitgetriebe 16, die Vorgelegewellen 12, 13 und die Hauptwelle 4 in die Sonnenradwelle 5 der Bereichsgruppe 3 geleitet, wobei das Antriebsdrehmoment beim Betrieb des Fahrzeuges in einem so genannten Direktgang direkt von der Eingangswelle 17 über eine Schaltvorrichtung 22 der Splitgruppe 16 in die Hauptwelle 4 des Hauptgetriebes geleitet wird.

Die Hauptwelle 4 des Hauptgetriebes ist zum Zweck eines Lastausgleiches in bekannter Weise zwischen den beiden Vorgelegewellen 12 und 13 schwimmend gelagert, d.h. die Hauptwelle 4 hat Spiel in radialer Richtung. Auf der Hauptwelle 4 sind mehrere Zahnräder 15 drehbeweglich als so genannte Losräder gelagert, die dauernd mit den ihnen zugeordneten Zahnrädern 11 auf den beiden Vorgelegewellen 12 und 13 im Eingriff sind. Jeweils ein Losrad 15 wird mittels einer Schaltvorrichtung 14 drehfest mit der Hauptwelle 4 verbunden, um eine Drehmomentübertragung mit einer dem jeweiligen Losrad 15 zugeordneten Übersetzungsstufe zu bewirken. Von den Zahnrädern und den Schaltvorrichtungen des Hauptgetriebes 2 ist jeweils nur ein Vorgelegewellenzahnrad 11, ein Losrad 15 und eine Schaltvorrichtung 14 beispielhaft bezeichnet.

Die Hauptwelle 4 ist an ihrem der Bereichsgruppe 3 zugewandten Ende mittels einer Verbindungsmuffe 6 drehfest mit einer Sonnenradwelle 5 der Bereichsgruppe 3 verbunden. In der als Planetengetriebe ausgeführten Bereichsgruppe 3 wird das Drehmoment abhängig von der Schaltstellung einer der Bereichsgruppe zugeordneten Schaltvorrichtung 21 entweder in einer 1:1-Überstetzung oder in einer höheren Übersetzung von der Sonnenradwelle 5 über Planetenräder und den Planetenträger 19 auf die Abtriebswelle 18 übertragen. Von der Abtriebswelle 18 wird das Drehmoment über den weiteren, nicht dargestellten Antriebsstrang zu den Rädern des Fahrzeuges geleitet.

An der Verbindungsmuffe 6 ist ein Drehzahlgeber 8 vorgesehen, der mit einem ihm gegenüberliegenden, feststehenden Drehzahlsensor 9 zusammenwirkt. Der Drehzahlgeber 8 kann beispielsweise eine in die Verbindungsmuffe 6 eingearbeitete Zählverzahnung oder eine auf der Verbindungsmuffe 6 befestigte Zählscheibe bzw. Zählbuchse sein. Der Drehzahlsensor 9 ist mittels eines Sensorarmes 10 in dem Getriebegehäuse 7 befestigt.

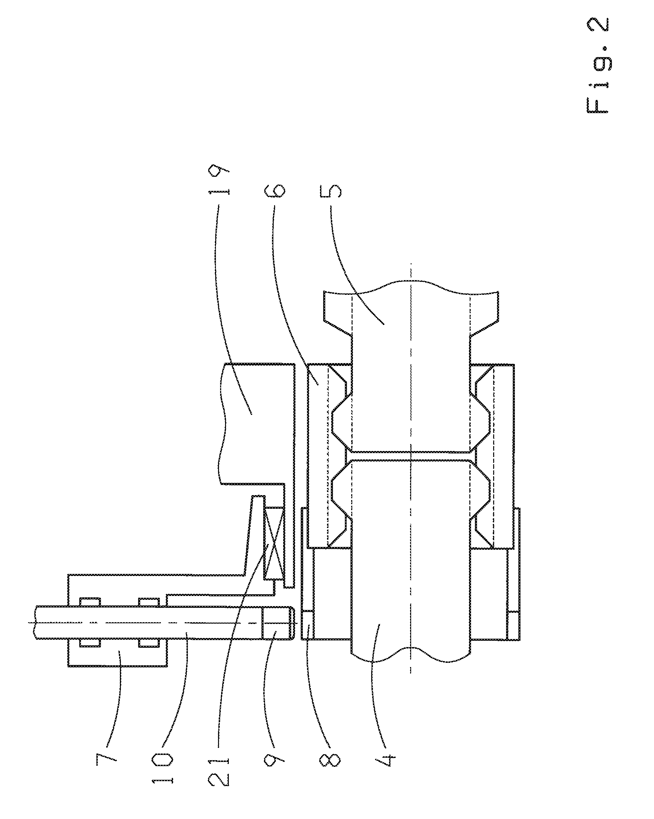

Der in Fig. 2 dargestellte Ausschnitt aus einem Mehrgruppengetriebe zeigt eine erfindungsgemäße Anordnung mit der Hauptwelle 4 eines Hauptgetriebes und der Sonnenradwelle 5 einer nachgeordneten Bereichsgruppe in Planetenbauweise. Die Hauptwelle 4 und die Sonnenradwelle 5 sind koaxial hintereinander angeordnet und mittels einer Verbindungsmuffe 6 drehfest miteinander verbunden. Dazu sind die jeweiligen Enden der Hauptwelle 4 und der Sonnenradwelle 5 jeweils mit einer Außenverzahnung versehen, die mit einer entsprechenden Innenverzahnung in der Verbindungsmuffe 6 im Eingriff sind. Auf die Verbindungsmuffe 6 ist eine Buchse 8 mit einer Zählverzahnung als Drehzahlgeber aufgepresst.

Dem Drehzahlgeber 8 gegenüberliegend ist ein Drehzahlsensor 9 an einem Sensorarm 10 angeordnet. Der Sensorarm 10 ist an einem Teil des Getriebegehäuses 7 befestigt. In dem Getriebegehäuse 7 ist auch der Planetenträger 19 mittels eines Wälzlagers 20 gelagert. Die Buchse 8 ist in diesem Fall so ausgeführt und angeordnet, dass die als Drehzahlgeber fungierende Zählverzahnung am freien Ende der Buchse 8 von der in der Bereichsgruppe angeordneten Verbindungsmuffe 6 bis nahe an den im Hauptgetriebe 2 angeordneten Drehzahlsensor 9 heranreicht. Alternativ dazu wäre es im Rahmen der vorliegenden Erfindung auch möglich, die Verbindungsmuffe 6 axial soweit in Richtung Hauptgetriebe verschoben anzuordnen, dass sie einem dort angeordneten Drehzahlsensor 9 direkt gegenüberliegt.

### Bezugszeichen

- 1: Mehrgruppengetriebe
- 2: Hauptgetriebe
- 3: Bereichsgruppe
- 4: Hauptwelle
- 5: Sonnenradwelle
- 6: Verbindungsmuffe
- 7: Getriebegehäuse
- 8: Drehzahlgeber
- 9: Drehzahlsensor
- 10: Sensorarm
- 11: Zahnrad
- 12: Vorgelegewelle
- 13: Vorgelegewelle
- 14: Schaltvorrichtung
- 15: Losrad
- 16: Splitgruppe
- 17: Eingangswelle
- 18: Abtriebswelle
- 19: Planetenträger
- 20: Hohlrad
- 21: Schaltvorrichtung
- 22: Schaltvorrichtung

## Patentansprüche

1. Anordnung zur Ermittlung der Drehzahl einer schwimmend gelagerten Hauptwelle (4) eines Hauptgetriebes (2) mit nachfolgend angeordneter Bereichsgruppe (3) in Form eines Planetengetriebes, wobei die Anordnung eine Hauptwelle (4), eine in axialer Verlängerung der Hauptwelle (4) angeordnete, der Bereichsgruppe (3) zugeordnete Sonnenradwelle (5) und eine Verbindungsmuffe (6) aufweist, wobei die Hauptwelle (4) und die Sonnenradwelle (5) mittels der Verbindungsmuffe (6) drehfest miteinander verbunden sind, und wobei die Anordnung einen drehfest mit der Hauptwelle (4) verbundenen Drehzahlgeber (8) und einen dem Drehzahlgeber (8) zugeordneten feststehenden Drehzahlsensor (9) aufweist, **dadurch gekennzeichnet, dass** der Drehzahlgeber (8) am Umfang der drehfest an der Hauptwelle (4) angeordneten Verbindungsmuffe (6) angeordnet ist.

2. Anordnung zur Ermittlung der Drehzahl einer schwimmend gelagerten Hauptwelle (4) eines Hauptgetriebes (2) mit nachfolgend angeordneter Bereichsgruppe (3) in Form eines Planetengetriebes, wobei die Anordnung eine Hauptwelle (4) und eine in axialer Verlängerung der Hauptwelle (4) angeordnete, der Bereichsgruppe (3) zugeordnete Sonnenradwelle (5) aufweist, wobei die Hauptwelle (4) und die Sonnenradwelle (5) drehfest miteinander verbunden sind, und wobei die Anordnung einen drehfest mit der Hauptwelle (4) verbundenen Drehzahlgeber (8) und einen dem Drehzahlgeber (8) zugeordneten feststehenden Drehzahlsensor (9) aufweist, **dadurch gekennzeichnet, dass** der Drehzahlgeber (8) an der Sonnenradwelle (5) angeordnet ist.

3. Anordnung nach Anspruch 1 oder 2, **dadurch gekennzeichnet, dass** der Drehzahlgeber (8) als eine auf die Verbindungsmuffe (6) bzw. Sonnenradwelle (5) aufgepresste Scheibe oder Buchse mit einer Zählverzahnung ausgebildet ist.

4. Anordnung nach Anspruch 1 oder 2, **dadurch gekennzeichnet, dass** der Drehzahlgeber (8) als eine direkt an der Verbindungsmuffe (6) bzw. Sonnenradwelle (5) angeformte Zählverzahnung ausgebildet ist.

5. Anordnung nach einem der vorangehenden Ansprüche, **dadurch gekennzeichnet, dass** der Drehzahlsensor (9) derart ausgerichtet ist, dass die Drehzahl in radialer Richtung an dem Drehzahlgeber (8) abgreifbar ist.

6. Anordnung nach einem der vorangehenden Ansprüche, **dadurch gekennzeichnet, dass** der Drehzahlsensor (9) derart ausgerichtet ist, dass die Drehzahl in axialer Richtung an dem Drehzahlgeber (8) abgreifbar ist.

7. Anordnung nach einem der vorangehenden Ansprüche, **dadurch gekennzeichnet, dass** der Drehzahlsensor (9) endseitig an einem Sensorarm (10) befestigt ist, und dass der Sensorarm (10) an einem Getriebegehäuse (11) befestigt ist.

8. Mehrgruppengetriebe (1) für ein Kraftfahrzeug mit einer zwischen zwei Vorgelegewellen (12, 13) schwimmend gelagerten Hauptwelle (4) in einem Hauptgetriebe (2) und mit einer in Planetenbauweise ausgeführten, dem Hauptgetriebe (2) nachgeordneten Bereichsgruppe (3), **gekennzeichnet durch** eine Anordnung nach einem der vorangehenden Ansprüche.
